# EUROPEAN PATENT APPLICATION

(11) **EP 4 206 942 A1**
(43) Date of publication of application: **05.07.2023**
(21) Application number: 21874221.1
(22) Date of filing: 13.09.2021
(51) Int. Cl.: G06F 16/22

(54) **DATA PROCESSING METHOD AND APPARATUS, AND DEVICE**

(30) Priority: 29.09.2020 CN 202011050075
(71) Applicant: Huawei Technologies Co., Ltd., Shenzhen, Guangdong 518129 (CN)
(72) Inventor: WU, Gang, Shenzhen, Guangdong 518129 (CN); ZHOU, Jianyou, Shenzhen, Guangdong 518129 (CN); XIE, Qian, Shenzhen, Guangdong 518129 (CN); HUANG, Quanchong, Shenzhen, Guangdong 518129 (CN)
(74) Representative: Isarpatent
(86) International application number: PCT/CN2021/117927
(87) International publication number: WO 2022/068560

(57) **Abstract**

A data processing method and apparatus, and a device are provided. In this application, a plurality of data processing modules may collaboratively process data. Data output by each data processing module is stored in a data set, the data set includes a plurality of pieces of data, each piece of data carries one index, and the index indicates a data processing module that generates the data. A first data processing module in the plurality of data processing modules may obtain, from the data set, first data carrying a first index, where the first index indicates a data processing module that generates the first data. Then, the first data processing module processes the first data to generate second data carrying a second index, where the second index indicates the first data processing module. Then, the first data processing module stores the second data into the data set. The data processing module may perform targeted processing on the data, thereby improving flexibility of collaboratively processing the data by the plurality of data processing modules.

## Description

### TECHNICAL FIELD

This application relates to the field of communication technologies, and in particular, to a data processing method and apparatus, and a device.

### BACKGROUND

A software development kit (software development kit, SDK) is usually designed as a module or plug-in. In other words, the SDK includes a plurality of software modules, and each software module is configured to implement a data processing function. The plurality of software modules may be spliced to process data in serial, in other words, each software module processes data output by a previous software module.

However, in this manner in which the plurality of software modules process data in serial, a software module obtains data output by a previous software module, updates a part of data in the data output by the previous software module, and then outputs data. In this case, a format of data transmitted between software modules is fixed. As long as the previous software module changes and a format of the output data changes, the software module may not accurately identify the output data of the previous software module, and consequently cannot accurately locate the part that needs to be updated in the data output by the previous software module.

Although the software modules may be spliced to process data in serial, if one of the software modules changes, another software module also needs to change accordingly. This manner of processing data by the plurality of software modules is fixed, and consequently has poor flexibility.

### SUMMARY

This application provides a data processing method and apparatus, and a device, to improve flexibility of collaboratively processing data by data processing modules.

According to a first aspect, an embodiment of this application provides a data processing method. The method is applied to a scenario in which a plurality of data processing modules collaboratively process data. Data output by each data processing module is stored in a data set, the data set includes a plurality of pieces of data, each piece of data carries one index, and the index indicates a data processing module that generates the data. A first data processing module in the plurality of data processing modules may obtain, from the data set, first data carrying a first index, where the first index indicates a data processing module that generates the first data. After obtaining the first data, the first data processing module may process the first data, to generate second data carrying a second index, where the second index indicates the first data processing module. Then, the first data processing module stores the second data into the data set. Another data processing module in the plurality of data processing modules may also process data in a similar manner.

According to the foregoing method, any data processing module in the plurality of data processing modules may obtain required data from the data set and process only the obtained data, without a need to obtain all data output by a previous data processing module of the data processing module. In this manner, the data processing module may perform targeted processing on the data. Therefore, flexibility of collaboratively processing data by the plurality of data processing modules is improved.

In a possible implementation, the data in the data set further carries indication information, and the indication information indicates a data processing module that generates input data when the data processing module generates the data based on the input data. The second data is used as an example. The second data may carry a first indication, and the first indication may indicate a data processing module that generates the first data. In other words, when generating the second data, the first data processing module adds the first indication and the second index to the second data.

According to the foregoing method, the indication information carried in the data in the data set may indicate an association relationship between data, so that the data can be subsequently combined based on the association relationship between the data.

In a possible implementation, the plurality of data processing modules may further include a module (namely, a serialization module) configured to serialize data. A manner in which the data processing module serializes the data is described by using a second data processing module as a serialization module. The second data processing module selects a plurality of pieces of data from the data set. For example, the plurality of pieces of data are the second data and third data. After converting the second data and the third data into serialized data, the second data processing module outputs the serialized data. The serialized data is data that has a data transmission form. In other words, the serialized data is data that can be transmitted.

In the foregoing manner, when serializing the data, the serialization module does not need to obtain the data from a previous data processing module, but may autonomously select, from the data set, the data that needs to be serialized to generate the serialized data. This manner is more flexible.

In a possible implementation, when selecting the plurality of pieces of data from the data set, the second data processing module may select one or more pieces of data from the data set based on an operation of a user. The operation of the user is an operation of selecting a plurality of data processing modules by the user or an operation of configuring an index by the user. For example, the third data carries a third index, and the third index indicates a third data processing module, in other words, the third data is data generated by the third data processing module. When the operation of the user is an operation of selecting the first data processing module and the third data processing module by the user or an operation of configuring the second index or the third index by the user, the second data processing module selects the second data and the third data from the data set. The second data processing module may alternatively select one or more pieces of data (for example, select the second data and the third data) from the data set based on one or more preconfigured indexes (where for example, the second index and the third index are preconfigured), where one piece of data carries one of the plurality of indexes. Then, the second data processing module converts the one or more pieces of data into serialized data, and outputs the serialized data.

According to the foregoing method, the second data processing module can flexibly select the plurality of pieces of data from the data set in different manners, which is applicable to different scenarios.

In a possible implementation, when converting the one or more pieces of data into the serialized data, the second data processing module may convert the one or more pieces of data into the serialized data based on a serialization rule set. The serialization rule set is preconfigured, the serialization rule set includes a plurality of serialization rules, and the serialization rule is a method for converting data into serialized data.

According to the foregoing method, the second data processing module can conveniently and quickly serialize a plurality of pieces of data based on the serialization rule set, to obtain serialized data.

In a possible implementation, the second data processing module converts the plurality of pieces of data into the serialized data based on the serialization rule set in many manners. The following lists two of the manners.

Manner 1: The second data processing module may convert the plurality of pieces of data into the serialized data based on the serialization rule set and an association relationship between the plurality of pieces of data, where the association relationship between the plurality of pieces of data is determined based on indication information in the plurality of pieces of data. For example, the second data processing module may first convert the plurality of pieces of data into a plurality of pieces of candidate serialized data based on the serialization rule set, in other words, convert each piece of data into one piece of candidate serialized data, and then determine the association relationship between the plurality of pieces of data based on the indication information in the plurality of pieces of data, where the association relationship between the plurality of pieces of data describes data based on which one piece of data in the plurality of pieces of data is generated. The second data processing module nests the plurality of pieces of candidate serialized data based on the association relationship between the plurality of pieces of data, and outputs the serialized data.

For example, the plurality of pieces of data are the second data and the third data. The third data further includes a second indication, and the second indication indicates a data processing module that generates input data of the third data processing module when the third data is generated. The second data processing module may determine an association relationship between the second data and the third data based on the first indication and the second indication, and then convert the second data and the third data into the serialized data based on the serialization rule set and the association relationship between the second data and the third data.

Manner 2: The second data processing module may first determine an association relationship between the plurality of pieces of data based on indication information in the plurality of pieces of data, then nest the plurality of pieces of data based on the association relationship, to obtain nested data, and then convert the nested data into a plurality of pieces of serialized data based on the serialization rule set and output the plurality of pieces of serialized data.

For example, the plurality of pieces of data are the second data and the third data. The third data further includes a second indication, and the second indication indicates a data processing module that generates input data of the third data processing module when the third data is generated. After determining an association relationship between the second data and the third data based on the first indication and the second indication, the second data processing module nests the plurality of pieces of data based on the association relationship, and then converts nested data into a plurality of pieces of serialized data based on the serialization rule set.

According to the foregoing method, the association relationship between the plurality of pieces of data can be conveniently determined based on indication information carried in each of the plurality of pieces of data, so that the candidate serialized data or the plurality of pieces of data can be nested, and the serialized data can be quickly generated.

In a possible implementation, the serialization rule in the serialization rule set may be configured according to an indication of the user. In other words, the user may autonomously define the serialization rule, for example, define a data format and serialized data corresponding to the data format, to generate the serialization rule. For example, a configuration interface of the serialization rule set may be displayed to the user, and the user may enter the serialization rule on the configuration interface. In this way, the second data processing module may receive the serialization rule from the configuration interface.

According to the foregoing method, the user autonomously defines the serialization rule, so that when the plurality of pieces of data are serialized, the serialized data can be obtained based on a requirement of the user. Therefore, a data serialization manner is more convenient, and can meet the requirement of the user.

In a possible implementation, before obtaining, from the data set, the first data carrying the first index, the first data processing module obtains the first index configured by the user. For example, a configuration interface of the first data processing module may be displayed to the user, and the user may enter the first index on the configuration interface, so that the first data processing module may receive the first index entered by the user.

According to the foregoing method, the user may configure, based on a requirement of the user, an index carried in data obtained by the first data processing module. In this way, the first data processing module can process the data under configuration of the user.

According to a second aspect, an embodiment of the present invention provides a data processing apparatus. The apparatus has a function of implementing behavior of each data processing module in the foregoing method example. The function may be implemented by hardware, or may be implemented by hardware by executing corresponding software. The hardware or software includes one or more modules corresponding to the foregoing function. The apparatus includes at least one data processing module, and the at least one data processing module may collaboratively process data. Data output by each data processing module is stored in a data set, the data set includes a plurality of pieces of data, each piece of data carries one index, and the index indicates a data processing module that generates the data.

In a possible implementation, a first data processing module in a plurality of data processing modules is used as an example to describe a manner in which the data processing module processes the data. The first data processing module may obtain, from the data set, first data carrying a first index, where the first index indicates a data processing module that generates the first data. Then, the first data processing module processes the obtained first data, to generate second data carrying a second index, where the second index indicates the first data processing module. Then, the first data processing module stores the second data into the data set.

In a possible implementation, the data in the data set further carries indication information, and the indication information indicates a data processing module that generates input data when the data processing module generates the data based on the input data. The second data is used as an example. When generating the second data, the first data processing module may add a first indication and the second index to the second data.

In a possible implementation, a second data processing module in the plurality of data processing modules is used as an example to describe a manner in which the data processing module serializes the data. The second data processing module may select a plurality of pieces of data from the data set based on an operation of a user. The operation of the user is an operation of selecting a plurality of data processing modules by the user. The plurality of pieces of data are data generated by the plurality of processing modules selected by the user. The second data processing module may alternatively select a plurality of pieces of data from the data set based on a plurality of preconfigured indexes. One of the plurality of pieces of data carries one of the plurality of indexes. Then, the second data processing module may convert the plurality of pieces of data into serialized data, and output the serialized data.

In a possible implementation, when converting the plurality of pieces of data into the serialized data, the second data processing module may convert the plurality of pieces of data into the serialized data based on a serialization rule set. The serialization rule set is preconfigured, the serialization rule set includes a plurality of serialization rules, and the serialization rule is a rule that needs to be complied with when data is converted into serialized data.

In a possible implementation, the second data processing module converts the plurality of pieces of data into the serialized data based on the serialization rule set in many manners. The second data processing module may determine an association relationship between the plurality of pieces of data, and then convert the plurality of pieces of data into the serialized data based on the serialization rule set and the association relationship. For example, the second data processing module may first convert the plurality of pieces of data into a plurality of pieces of candidate serialized data based on the serialization rule set, then determine the association relationship between the plurality of pieces of data based on indication information in the plurality of pieces of data, and then nest the plurality of pieces of candidate serialized data based on the association relationship and output the serialized data. For another example, the second data processing module may first determine the association relationship between the plurality of pieces of data based on indication information in the plurality of pieces of data, then nest the plurality of pieces of data based on the association relationship, to obtain nested data, and then convert the nested data into a plurality of pieces of serialized data based on the serialization rule set and output the plurality of pieces of serialized data.

In a possible implementation, the serialization rule is configured based on the user. For example, a configuration interface of the serialization rule set may be displayed to the user, and the user may enter the serialization rule on the configuration interface. In this way, the second data processing module may receive the serialization rule from the configuration interface.

In a possible implementation, before obtaining, from the data set, the first data carrying the first index, the first data processing module may further obtain the first index configured by the user. For example, a configuration interface of the first data processing module may be displayed to the user, and the user may enter the first index on the configuration interface, so that the first data processing module may receive the first index entered by the user.

According to a third aspect, an embodiment of this application further provides a computing device. The computing device includes a processor and a memory, and may further include a communication interface. The processor executes program instructions in the memory to perform the method according to any one of the first aspect or the possible implementations of the first aspect. The memory is coupled to the processor, and stores necessary program instructions and data, for example, stores a data set. The communication interface is configured to communicate with another device, for example, receive a first index or a serialization rule.

According to a fourth aspect, this application provides a computing device cluster. The computing device cluster includes at least one computing device. Each computing device includes a memory and a processor. A processor in the at least one computing device is configured to access code in the memory to perform the method according to any one of the first aspect or the possible implementations of the first aspect.

According to a fifth aspect, this application provides a non-transient readable storage medium. When the non-transient readable storage medium is executed by a computing device, the computing device performs the method according to any one of the first aspect or the possible implementations of the first aspect. The storage medium stores a program. The storage medium includes but is not limited to a volatile memory, for example, a random access memory; or a non-volatile memory, for example a flash memory, a hard disk drive (hard disk drive, HDD), and a solid-state drive (solid-state drive, SSD).

According to a sixth aspect, this application provides a computer program product. The computer program product includes computer instructions. When the computer instructions are executed by a computing device, the computing device performs the method according to any one of the first aspect or the possible implementations of the first aspect. The computer program product may be a software installation package. When the method according to any one of the foregoing aspects or the possible implementations of the foregoing aspects needs to be used, the computer program product may be downloaded and executed by the computing device.

According to a seventh aspect, this application further provides a computer chip. The chip is connected to a memory, and the chip is configured to read and execute a software program stored in the memory, to perform the method according to any one of the first aspect or the possible implementations of the first aspect.

### BRIEF DESCRIPTION OF DRAWINGS

FIG. 1 is a schematic diagram of an architecture of a system according to this application;
FIG. 2 is a schematic diagram of a data processing method according to this application;
FIG. 3A is a flowchart of data processing of a data processing module according to this application;
FIG. 3B is a schematic diagram of an association relationship between data according to this application;
FIG. 3C is a schematic diagram of data selection according to this application;
FIG. 4 is a schematic diagram of a structure of data processing according to this application;
FIG. 5 is a schematic diagram of a structure of a computing device according to this application; and
FIG. 6 is a schematic diagram of a structure of a computing device cluster according to this application.

### DESCRIPTION OF EMBODIMENTS

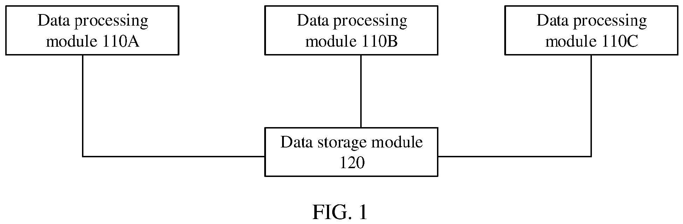

FIG. 1 is a schematic diagram of a structure of a system according to an embodiment of this application. The system 100 includes a plurality of data processing modules 110 and a data storage module 120. Only three of the data processing modules are illustrated in the system as examples. For ease of description, the three data processing modules are separately named a data processing module 110A, a data processing module 110B, and a data processing module 110C.

The data storage module 120 is configured to store a data set, where the data set includes a plurality of pieces of data, and each piece of data is data generated by one of the plurality of data processing modules 110. Each piece of data includes one index, and the index can indicate the data processing module 110 that generates the data. A specific representation form of the index is not limited in this embodiment of this application. For example, the index may be a number of the data processing module 110, may be a name of the data processing module 110, or may be other information that can indicate the data processing module 110.

Each data processing module 110 may implement a data processing function, and can perform specific processing on data (namely, input data) input into the data processing module 110, and generate data.

Each data processing module 110 needs to first obtain the input data from the data set. For any data processing module 110, the data processing module 110 may obtain, from the data set, data carrying a specific index. The specific index may be preconfigured for the data processing module 110, or may be indicated by a user to the data processing module 110.

After obtaining the data carrying the specific index, the data processing module 110 may process the data carrying the specific index, to generate data. The data generated by the data processing module 110 carries an index that can indicate the data processing module 110. After generating the data, the data processing module 110 may store the data into the data set. Optionally, the data processing module 110 may further add indication information to the data, to indicate a data processing module that generates the input data of the data processing module 110 when the data is generated.

In this embodiment of this application, locations at which the plurality of data processing modules 110 and the data storage module 120 are deployed are not limited. For example, the plurality of data processing modules 110 and the data storage module 120 may be deployed in a same computing device. The computing device may be a server located in a cloud data center, or may be a server deployed in an edge data center. The plurality of data processing modules 110 and the data storage module 120 may be distributed in a plurality of different computing devices. The plurality of different computing devices may be a server cluster located in a cloud data center, or may be a server cluster deployed in an edge data center. For example, the data processing module 110 and the data storage module 120 may be deployed in different computing devices. When the data processing module 110 needs to obtain data from the data set, the data processing module 110 may request, from a computing device in which the data storage module 120 is located, data configured with a specific index, to obtain the data. After generating data, the data processing module 110 may send the data to the computing device in which the data storage module 120 is located, to request to store the data into the data set.

A specific form of the plurality of data processing modules 110 are not limited in this embodiment of this application. For example, the plurality of data processing modules 110 may be software modules or hardware modules.

In this embodiment of this application, data processing operations performed by the plurality of data processing modules 110 are not a strict serial processing process. In other words, a sequence of processing data by the plurality of data processing modules 110 is not always unchanged. The sequence of processing the data by the plurality of data processing modules 110 may be set based on a data processing scenario or may be configured by the user, so that a manner of processing the data by the plurality of data processing modules 110 is more flexible.

The following uses a manner in which the data processing module 110A, the data processing module 110B, and the data processing module 110C collaboratively process data as an example to describe a manner in which the plurality of data processing modules 110 collaboratively process data.

Specific indexes may be configured for the data processing module 110A, the data processing module 110B, and the data processing module 110C. The specific index indicates a data processing module 110 that generates input data of the data processing module 110.

For example, an index 1 indicates the data processing module 110A, an index 2 indicates the data processing module 110B, and an index 3 indicates the data processing module 110C.

An index configured for the data processing module 110A is the index 2, an index configured for the data processing module 110C is the index 1, and an index configured for the data processing module 110B is an index 0, where the index 0 indicates data that is not processed by the data processing module 110, that is, original data.

A manner of configuring an index for each data processing module 110 is not limited in this embodiment of this application. For example, the index may be preconfigured for the data processing module 110, and the index is written into or sent to each data processing module 110 in advance. For another example, the user may autonomously configure the index for each data processing module 110. In this way, the user may configure the index for each data processing module 110 based on a requirement, so that each data processing module 110 may obtain, from the data set under configuration of the user, data carrying the index, and process the data. A manner in which the user configures the index is not limited herein. For example, the user may write the index into a configuration file of the data processing module 110, or may input the index in a configuration interface of the data processing module 110.

A data processing sequence of the plurality of data processing modules 110 may be determined based on the index configured for each data processing module 110. In this embodiment of this application, the data processing module 110B first processes the original data, the data processing module 110A processes data generated by the data processing module 110B, and the data processing module 110C processes data generated by the data processing module 110B. In other words, the data processing sequence of the plurality of data processing modules 110 is: the data processing module 110B->the data processing module 110A->the data processing module 110C.

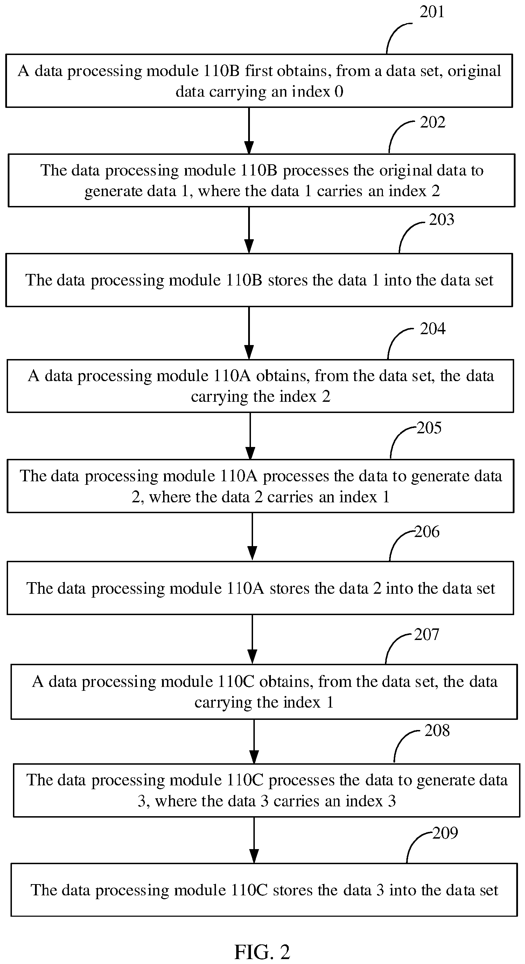

As shown in FIG. 2, a data processing method provided in an embodiment of this application is described by using a data processing module 110A, a data processing module 110B, and a data processing module 110C as an example. The method includes the following steps.

Step 201: The data processing module 110B first obtains, from a data set, original data carrying an index 0.

Step 202: The data processing module 110B processes the original data to generate data 1, where the data 1 carries an index of the data processing module 110B, that is, carries an index 2, indicating that the data 1 is generated by the data processing module 110B.

Step 203: The data processing module 110B stores the data 1 into the data set.

It should be noted that, that the data processing module 110B stores the data 1 into the data set may be that the data processing module 110B replaces the original data in the data set with the data 1, or may be that the data processing module 110B only stores the data 1 into the data set, and the data set still stores the original data. The former is to replace data, and the latter is to add data. The former is applicable to a scenario in which a plurality of data processing modules 110 perform strict serial processing, that is, there is no case in which two data processing modules 110 process same data. The latter is applicable to more scenarios: a serial processing scenario, a parallel data processing scenario (where the plurality of data processing modules 110 process same data), and a scenario in which serial processing and parallel processing are combined. Each data processing module 110 obtains only data that needs to be processed by the data processing module 110. For example, when obtaining the original data, the data processing module 110B may alternatively obtain only some data in the original data.

Step 204: The data processing module 110A obtains, from the data set, the data carrying the index 2.

Step 205: The data processing module 110A processes the data to generate data 2, where the data 2 carries an index of the data processing module 110A, that is, carries an index 1, indicating that the data 2 is generated by the data processing module 110A.

Step 206: The data processing module 110A stores the data 2 into the data set. A manner in which the data processing module 110A stores the data 2 into the data set is similar to a manner in which the data processing module 110B stores the data 1 into the data set. For details, refer to the foregoing descriptions.

Step 207: The data processing module 110C obtains, from the data set, the data carrying the index 1.

Step 208: The data processing module 110C processes the data to generate data 3, where the data 3 carries an index of the data processing module 110C, that is, carries an index 3, indicating that the data 3 is generated by the data processing module 110C.

Step 209: The data processing module 110C stores the data 3 into the data set. A manner in which the data processing module 110C stores the data 3 into the data set is similar to the manner in which the data processing module 110B stores the data 1 into the data set. For details, refer to the foregoing descriptions.

In a possible implementation, data generated by a data processing module 110 may be split into a plurality of pieces of sub-data, and another data processing module 110 may process only a part of pieces of sub-data in the data generated by the data processing module 110. After generating the data, the data processing module 110 may set an identifier for each piece of sub-data of the data in addition to including an index in the data. In other words, the sub-data corresponds to one identifier and one index. The identifier is used to identify the sub-data, and the index indicates the data processing module 110 that generates the sub-data. A specific representation form of the identifier is not limited herein. The identifier may be a number set by the data processing module 110 for the sub-data, or may be an identifier set by the data processing module 110 based on a type of the sub-data. For example, if the sub-data is a target box (box), the identifier of the sub-data is "box". If the plurality of pieces of sub-data generated by the data processing module 110 are a plurality of target boxes, to distinguish between different target boxes, identifiers set by the data processing module 110 for the plurality of target boxes each may be "box+number". The first target box is box 1, and the second target box is box 2.

In this case, if the another data processing module 110 processes only a part of pieces of sub-data in the data generated by the data processing module 110, in addition to configuring the index of the data processing module 110, the another data processing module 110 may further configure an identifier of sub-data, to indicate the another data processing module 110 to obtain, from the data set, sub-data corresponding to the index and the identifier. In this way, the another data processing module 110 may obtain the corresponding sub-data from the data set based on the configured index and the configured identifier of the sub-data, and process the sub-data.

It can be learned from the foregoing data processing process that an index carried in data in the data set may indicate a data processing module 110 that generates the data. To represent, in the data, an association relationship between data in the data set, indication information may be carried in the data, and the indication information can indicate a data processing module 110 that generates data based on which the data is generated.

In data generated by the data processing module 110A, the data processing module 110B, and the data processing module 110C, the data 2 generated by the data processing module 110A is generated based on the data 1 generated by the data processing module 110B, the data 1 generated by the data processing module 110B is generated based on the original data, and the data 3 generated by the data processing module 110C is generated based on the data 2 generated by the data processing module 110A.

The association relationship between the data may also be understood as an association relationship between data processing modules 110, and the association relationship between the data processing modules 110 indicates a data processing sequence of the data processing modules 110.

For example, indication information that may be carried in the data 2 is a second indication, and the second indication indicates the data processing module 110B. The data 2 carrying the second indication is generated based on the data generated by the data processing module 110B, the data 2 carries the index 1, and is data generated by the data processing module 110A. An association relationship exists between the data processing module 110A and the data processing module 110B. The data processing module 110B is before the data processing module 110A.

Indication information that may be carried in the data 3 is a first indication, and the first indication indicates the data processing module 110A. The data 3 carrying the first indication is generated based on the data generated by the data processing module 110A, the data 3 carries the index 3, and is data generated by the data processing module 110C. An association relationship exists between the data processing module 110C and the data processing module 110A. The data processing module 110A is before the data processing module 110C.

Indication information that may be carried in the data 1 is a zeroth indication, and the zeroth indication indicates the original data, that is, does not indicate any data processing module 110. The data 1 carrying the zeroth indication is generated based on the original data, the data 1 carries the index 2, and is data generated by the data processing module 110B. The data processing module 110B is a data processing module 110 that first performs data processing, and the data processing module 110B is at a start location.

The association relationship between the data may be established based on indication information carried in the data in the data set, and the association relationship between the data may be represented in a form of a directed graph.

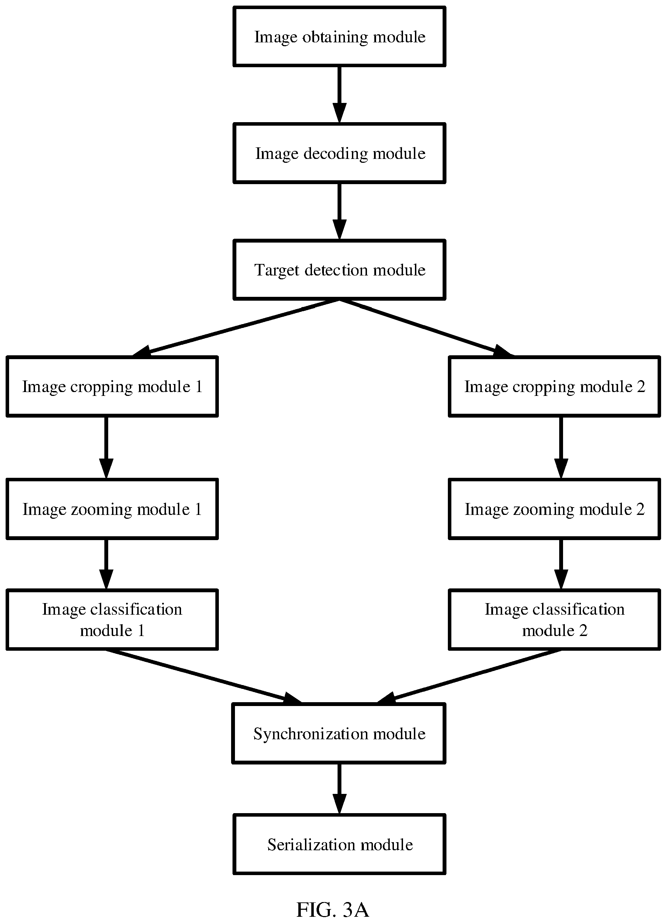

Image processing is used as an example. FIG. 3A shows a sequence of data processing modules 110 in an image processing process. In this embodiment of this application, the sequence of the data processing modules 110 represents a data processing sequence of the data processing modules 110. A data processing module 110 at a front location processes data, and a subsequent data processing module 110 processes data generated by the data processing module 110 before the subsequent data processing module 110.

As shown in FIG. 3A, an image obtaining module first obtains an image (data 0), and then transmits the obtained image to an image decoding module. The image decoding module decodes the image to generate a decoded image (data 1). A target detection module obtains the decoded image, performs target detection on the decoded image, and determines a plurality of target boxes in the image, where the target boxes include a target box 1 and a target box 2 (data 2, where the data 2 may include a plurality of pieces of sub-data, and each piece of sub-data is one target box).

An image cropping module 1 obtains the target box 1, and crops the image based on the target box 1, to obtain an image (data 3) having only the target box 1. An image zooming module 1 zooms in the image having only the target box 1, and outputs an enlarged image 1 (data 4). An image classification module 1 obtains the enlarged image 1, performs image classification based on the enlarged image 1, and determines a category (data 5) of the enlarged image 1. An image cropping module 2 obtains the target box 2, and crops the image based on the target box 2, to obtain an image (data 6) having only the target box 2.

An image zooming module 2 zooms in the image having only the target box 2, and outputs an enlarged image 2 (data 7). An image classification module 2 obtains the enlarged image 2, performs image classification based on the enlarged image 1, and determines a category (data 8) of the enlarged image 2. A synchronization module summarizes the category of the enlarged image 2 and the category of the enlarged image 2, and inputs the category of the enlarged image 2 and the category of the enlarged image 2 into a serialization module. The serialization module converts the category of the enlarged image 2 and the category of the enlarged image 2 into serialized data (data 9).

The data 1, the data 2, ..., and the data 9 each carry indication information to indicate a data processing module 110 from which input data for generating the data comes. The data 2 is used as an example. Indication information in the data 2 may indicate that the data 2 is generated based on the data generated by the image decoding module.

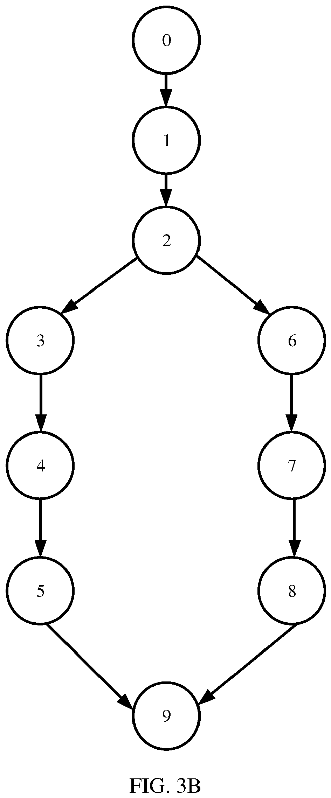

An association relationship between the data may be established based on indication information carried in the data 1, the data 2, ..., and the data 9. FIG. 3B shows an association relationship between the data 0, the data 1, the data 2, ..., and the data 9. In FIG. 3B, the association relationship between the data is represented in a directed graph manner. The directed graph manner is merely an example. This embodiment of this application does not limit a representation manner of the association relationship between the data. For example, a mapping may alternatively be established between the data, to represent the association relationship between the data.

In the foregoing descriptions, the association relationship between the data (which may also be understood as a sequence of the data processing modules 110) is determined based on the indication information carried in the data, and then the association relationship between the data is represented in the form of a directed graph. During actual application, the association relationship between the data (which may also be understood as the sequence of the data processing modules 110) may also be determined in another manner. For example, association information is configured in each data processing module 110. The association information indicates a data processing module 110, after the data processing module 110, that processes data output by the data processing module 110, and the association information indicates a sequence of data processing modules 110. The sequence of the data processing modules 110 may be determined based on the association information configured in each data processing module 110, and the association relationship between the data may be further determined. Therefore, a directed graph may be constructed to represent the association relationship between the data.

Data output by some data processing modules 110 is usually a class or an object in source code, and is not data in a form that can be directly transmitted, that is, is not serialized data. To convert the data output by these data processing modules 110 into serialized data that is easy to process, the plurality of data processing modules 110 may further include a serialization module. The serialization module is configured to convert data into serialized data. In this embodiment of this application, the serialized data is data having a data transmission form, that is, data used during data transmission. For example, the serialized data may be binary data, or may be a JSON character string.

When converting the data into the serialized data, the serialization module needs to first determine the data that needs to be converted into the serialized data. The serialization module may select, from the data set, data carrying a specific index. The specific index may be configured for the serialization module. In this embodiment of this application, a quantity of specific indexes configured for the serialization module is not limited, and may be one or more. A manner of configuring the specific index for the serialization module is essentially a manner of configuring an index for the data processing module 110. For the manner of configuring the specific index, refer to the foregoing descriptions, and details are not described herein again.

Alternatively, the serialization module may select one or more pieces of data from the data set under triggering of a user. For example, the user may select one or more data processing modules 110 from the plurality of data processing modules 110, and an operation of the user may indicate the serialization module to serialize data generated by the one or more selected data processing modules 110, to generate serialized data. After detecting the operation of the user, the serialization module may select, from the data set, the data generated by the one or more data processing modules 110 selected by the user.

When serializing a plurality of pieces of data, the serialization module may convert the plurality of pieces of data into serialized data based on a serialization rule set and an association relationship between the plurality of pieces of data. Specifically, the plurality of pieces of data may be serialized in the following two manners.

Manner 1: The serialization module first serializes the plurality of pieces of data to generate a plurality of pieces of candidate serialized data, and then integrates the plurality of pieces of candidate serialized data into serialized data and outputs the serialized data.

After determining one or more pieces of data that needs to be serialized, the serialization module may serialize the one or more pieces of data, convert the one or more pieces of data into serialized data, and output the serialized data.

The serialization module may convert the one or more pieces of data into the serialized data based on the serialization rule set.

The serialization rule set includes one or more serialization rules. One serialization rule may be used for data of one data structure, and indicate a method for converting data having the data structure into serialized data. The serialization rule may specify a correspondence between data having a specific data structure and serialized data, and indicate a form of the serialized data obtained after the data is converted.

The serialization rule set may be preconfigured, and the serialization rule in the serialization rule set may be updated. For example, the serialization rule in the serialization rule set is modified or a serialization rule is added.

The serialization rule set may alternatively be configured by the user. For example, a configuration interface of the serialization rule set may be displayed to the user. The user may configure a data structure and corresponding serialization data on the configuration interface, that is, configure a serialization rule. The serialization module may receive the serialization rule configured by the user.

Update of the serialization rule set may be triggered by the user. For example, the user may view the serialization rule set, and may indicate the serialization module to update the serialization rule set. The update of the serialization rule set may alternatively be indicated by another device. For example, the another device may send a serialization rule set update indication. The indication may carry a serialization rule that needs to be added or a modified serialization rule. After receiving the indication, the serialization module may update the serialization rule set based on the indication.

When the serialization module needs to serialize one piece of data, the serialization module may directly perform conversion based on the serialization rule set, to obtain serialized data.

When the serialization module needs to serialize a plurality of pieces of data, the serialization module separately serializes the plurality of pieces of data based on the serialization rule set, and converts the plurality of pieces of data into a plurality of pieces of candidate serialized data. Then, the serialization module further needs to determine an association relationship between the plurality of pieces of data based on indication information carried in the plurality of pieces of data. Then, the serialization module may nest the plurality of pieces of candidate serialized data based on the association relationship between the plurality of pieces of data, to output serialized data. A nesting manner is not limited herein. Nesting includes but is not limited to: data addition (for example, adding one piece of candidate serialized data to another piece of candidate serialized data) and data replacement (for example, replacing a part or all of data in one piece of candidate serialized data with another piece of candidate serialized data).

For example, for the data 1 and the data 2, there is an association relationship between the data 2 and the data 1. The data 2 is generated based on the data 1. The serialization module may separately serialize the data 1 and the data 2, and convert the data 1 and the data 2 into corresponding candidate serialized data. Then, candidate serialized data corresponding to the data 2 is added to candidate serialized data corresponding to the data 1, to obtain serialized data.

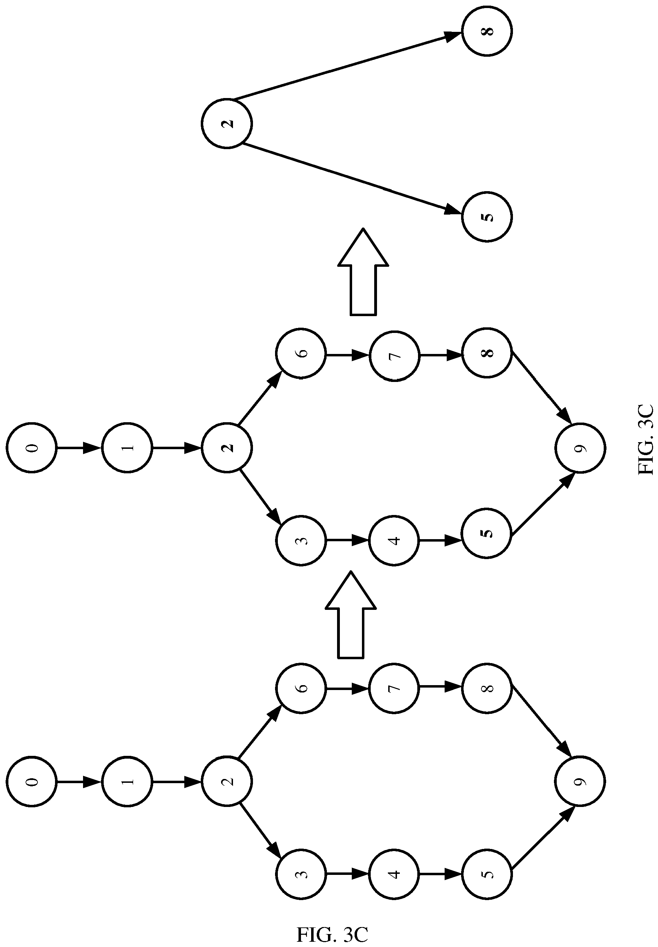

Image processing shown in FIG. 3A and FIG. 3B is used as an example. If the user selects the target detection module, the image classification module 1, and the image classification module 2 from the plurality of data processing modules 110, the serialization module may select the data 2, the data 5, and the data 8 from the data set based on selection of the user. As shown in FIG. 3C, the serialization module may convert a directed graph in FIG. 3B into a rightmost directed graph in FIG. 3C, and therefore may determine an association relationship between the data 2, the data 5, and the data 8.

The serialization module serializes the data 2, the data 5, and the data 8 based on the serialization rule, and converts the data 2, the data 5, and the data 8 into corresponding candidate serialized data. Then, the candidate serialized data corresponding to the data 2, the data 5, and the data 8 is nested based on the association relationship between the data 2, the data 5, and the data 8. The serialization module may add candidate serialized data corresponding to the data 5 to data in which the target box 1 is located in candidate serialized data corresponding to the data 2, and add candidate serialized data corresponding to the data 8 to data in which the target box 2 is located in the candidate serialized data corresponding to the data 2.

Manner 2: The serialization module first nests the plurality of pieces of data, and then serializes nested data, to output serialized data.

The serialization module may first determine the association relationship between the plurality of pieces of data based on indication information carried in the plurality of pieces of data, and then may nest the plurality of pieces of data based on the association relationship between the plurality of pieces of data. A nesting manner is not limited herein. Nesting includes but is not limited to: data addition (for example, adding one piece of data to another piece of data) and data replacement (for example, replacing a part or all of data in one piece of data with another piece of data).

Image processing shown in FIG. 3A and FIG. 3B is still used as an example. If the user selects the target detection module, the image classification module 1, and the image classification module 2 from the plurality of data processing modules 110, the serialization module may select the data 2, the data 5, and the data 8 from the data set based on selection of the user. As shown in FIG. 3C, the serialization module may convert a directed graph in FIG. 3B into a rightmost directed graph in FIG. 3C, and therefore may determine an association relationship between the data 2, the data 5, and the data 8.

Based on the association relationship between the data 2, the data 5, and the data 8, the serialization module adds the data 5 to data in which the target box 1 is located in the data 2, and adds the data 8 to data in which the target box 2 is located in the data 2, to obtain nested data. Then, the serialization module serializes the nested data based on the serialization rule, and converts the nested data into serialized data.

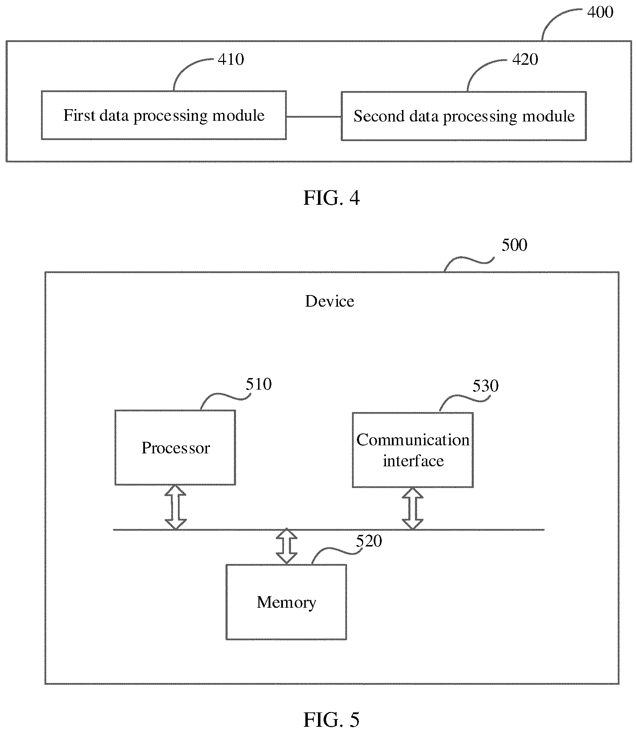

Based on a same inventive concept as that of the method embodiment, an embodiment of this application further provides a data processing apparatus, configured to perform the method performed by the plurality of data processing modules in the foregoing method embodiment. For related features, refer to the foregoing method embodiment. Details are not described herein again. As shown in FIG. 4, the data processing apparatus 400 includes a plurality of data processing modules. Herein, an example in which the plurality of data processing modules include a first processing module 410 and a second data processing module 420 is used. A quantity of first data processing modules 410 and a quantity of second data processing modules 420 are not limited herein.

The first data processing module 410 may obtain, from a data set, first data carrying a first index, where the first index indicates a data processing module that generates the first data; then process the obtained first data to generate second data carrying a second index, where the second index indicates the first data processing module; and store the second data into the data set. The first data processing module may perform the steps performed by the data processing module 110A, the data processing module 110B, and the data processing module 110C in the embodiment shown in FIG. 2.

The second data processing module 420 may obtain a plurality of pieces of data from the data set, convert the plurality of pieces of data into serialized data, and output the serialized data. The second data processing module 420 may perform the method performed by the serialization module in the foregoing embodiment.

It should be noted that, in embodiments of this application, division into the units is an example, and is merely logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the method described in embodiments of this application. The storage medium includes any medium that can store program code, such as a USB flash drive, a removable hard disk, a read-only memory (read-only memory, ROM), a random access memory (random access memory, RAM), a magnetic disk, or a compact disc.

In a simple embodiment, a person skilled in the art may figure out that the data processing apparatus in the foregoing embodiment may use a form shown in FIG. 5.

A computing device 500 shown in FIG. 5 includes at least one processor 510, a memory 520, and a communication interface 530. Optionally, the computing device 500 may further include a display 540.

The processor 510 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL), or any combination thereof.

The memory 520 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 520 is any other medium that can be used to carry or store expected program code in an instruction form or a data structure form and that can be accessed by a computer. However, the memory is not limited thereto. The memory 520 may be a combination of the foregoing memories. The memory 520 stores executable code and a data set.

A specific connection medium between the processor 510 and the memory 520 is not limited in this embodiment of this application.

The device shown in FIG. 5 further includes the communication interface 530. When communicating with another device, the processor 510 may obtain a first index or a serialization rule through the communication interface 530. The processor 510 may further trigger the display 540 to display information to a user. For example, the display 540 may display serialized data, and may further display an interface prompting the user to configure the first index or a serialization rule set.

When the data processing apparatus uses the form shown in FIG. 5, the processor 510 in FIG. 5 may invoke computer-executable instructions stored in the memory 520, so that the device 500 may perform the method performed by the plurality of data processing modules in any one of the foregoing method embodiments. For example, the device 500 may perform the method performed by each data processing module in the method embodiment shown in FIG. 2, and may further perform the method performed by the serialization module.

Specifically, functions/implementation processes of the first data processing module and the second data processing module in FIG. 4 may be implemented by the processor 510 in FIG. 5 by invoking the computer-executable instructions stored in the memory 520.

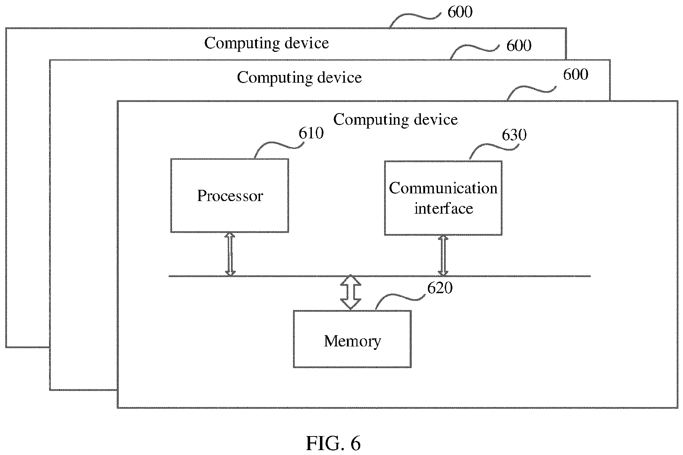

FIG. 6 shows a computer cluster according to an embodiment of this application. The computer cluster includes at least one computing device 600, and a communication path is established between computing devices 600 through a communication network.

Each computing device 600 includes a processor 610, a memory 620, and a communication interface 630. Optionally, the computing device 600 may further include a display 640. The processor 602, the memory 606, and the communication interface 603 may communicate with each other.

For descriptions of the processor 610 and the memory 620, refer to descriptions of the processor 510 and the memory 520. Details are not described herein again.

The memory 620 stores executable code and a data set. The processor 610 may read the executable code in the memory 620 to implement a function, and may further communicate with another computing device through the communication interface 630. The processor 610 may further trigger the display 640 to display information to a user. For example, the display 640 may display serialized data, and may further display an interface prompting the user to configure a first index or a serialization rule set.

In this embodiment of this application, the processor 610 may invoke computer-executable instructions stored in the memory 620, so that the device 600 may perform the method performed by the one or more data processing modules in any one of the foregoing method embodiments. For example, the device 600 may perform the method performed by the one or more data processing modules in the method embodiment shown in FIG. 2, and may further perform the method performed by the serialization module.

It should be understood that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

It is clear that a person skilled in the art can make various modifications and variations to embodiments of this application without departing from the scope of embodiments of this application. This application is intended to cover these modifications and variations of embodiments of this application provided that they fall within the scope of protection defined by the following claims of this application and their equivalent technologies.

## Claims

1. A data processing method, wherein the method comprises:
obtaining, by a first data processing module from a data set, first data carrying a first index, wherein the first index indicates a data processing module that generates the first data;
processing, by the first data processing module, the obtained first data, to generate second data carrying a second index, wherein the second index indicates the first data processing module; and
storing, by the first data processing module, the second data into the data set.

2. The method according to claim 1, wherein the generating, by the first data processing module, second data carrying a second index comprises:
adding, by the first data processing module, a first indication and the second index to the second data, wherein the first indication indicates the data processing module that generates the first data.

3. The method according to claim 1 or 2, wherein the data set further comprises third data, and the method further comprises:
selecting, by a second data processing module, the second data and the third data from the data set; and
outputting, by the second data processing module, serialized data after converting the second data and the third data into the serialized data.

4. The method according to claim 3, wherein the third data carries a third index, the third index indicates a third data processing module, and the selecting, by a second data processing module, the second data and the third data from the data set comprises:
selecting, by the second data processing module, the second data and the third data from the data set based on an operation of a user, wherein the operation of the user is an operation of selecting the first data processing module and the third data processing module by the user or an operation of configuring the second index or the third index by the user.

5. The method according to claim 3 or 4, wherein the outputting, by the second data processing module, serialized data after converting a plurality of pieces of data into the serialized data comprises:
converting, by the second data processing module, the second data and the third data into the serialized data based on a serialization rule set, wherein the serialization rule set is preconfigured, the serialization rule set comprises a plurality of serialization rules, and the serialization rule indicates a method for converting data into serialized data.

6. The method according to claim 5, wherein the third data further comprises a second indication, the second indication indicates a data processing module that generates input data of the third data processing module when the third data is generated, and the converting, by the second data processing module, the second data and the third data into the serialized data based on a serialization rule set comprises:
converting, by the second data processing module, the second data and the third data into the serialized data based on the serialization rule set and an association relationship between the second data and the third data, wherein the association relationship between the second data and the third data is determined based on the first indication and the second indication.

7. The method according to claim 5, wherein the converting, by the second data processing module, the plurality of pieces of data into the serialized data based on a serialization rule set comprises:
determining, by the second data processing module, an association relationship between the second data and the third data based on the first indication and a second indication;
nesting, by the second data processing module, the plurality of pieces of data based on the association relationship; and
converting, by the second data processing module, nested data into a plurality of pieces of serialized data based on the serialization rule set.

8. The method according to any one of claims 5 to 7, wherein the method further comprises:
receiving, by the second data processing module, the serialization rule in a configuration interface that is of the serialization rule set and that is displayed to the user.

9. The method according to any one of claims 1 to 8, wherein the obtaining, by a first data processing module from a data set, first data carrying a first index comprises:
displaying a configuration interface of the first data processing module to the user;
receiving, by the first data processing module through the configuration interface of the first data processing module, the first index entered by the user; and
obtaining, by the first data processing module from the data set, the first data carrying the first index.

10. The method according to any one of claims 1 to 9, wherein the obtaining, by a first data processing module from a data set, first data carrying a first index comprises:
obtaining, by the first data processing module, the first data from a storage device, wherein the storage device stores the data set.

11. A data processing apparatus, wherein the apparatus comprises at least one data processing module; and
a first data processing module in the at least one data processing module is configured to: obtain, from a data set, first data carrying a first index, wherein the first index indicates a data processing module that generates the first data; process the obtained first data, to generate second data carrying a second index, wherein the second index indicates the first data processing module; and store the second data into the data set.

12. The apparatus according to claim 11, wherein when generating the second data carrying the second index, the first data processing module is specifically configured to:
add a first indication and the second index to the second data, wherein the first indication indicates the data processing module that generates the first data.

13. The apparatus according to claim 11 or 12, wherein the data set further comprises third data, and a second data processing module in the at least one data processing module is configured to: select the second data and the third data from the data set; and output serialized data after converting the second data and the third data into the serialized data.

14. The apparatus according to claim 13, wherein the third data carries a third index, the third index indicates a third data processing module, and when selecting the second data and the third data from the data set, the second data processing module is specifically configured to:
select the second data and the third data from the data set based on an operation of a user, wherein the operation of the user is an operation of selecting the first data processing module and the third data processing module by the user or an operation of configuring the second index or the third index by the user.

15. The apparatus according to claim 13 or 14, wherein when converting a plurality of pieces of data into the serialized data, the second data processing module is specifically configured to:
convert the second data and the third data into the serialized data based on a serialization rule set, wherein the serialization rule set is preconfigured, the serialization rule set comprises a plurality of serialization rules, and the serialization rule indicates a method for converting data into serialized data.

16. The apparatus according to claim 15, wherein the third data further comprises a second indication, the second indication indicates a data processing module that generates input data of the third data processing module when the third data is generated, and when converting the second data and the third data into the serialized data based on the serialization rule set, the second data processing module is specifically configured to:
convert the second data and the third data into the serialized data based on the serialization rule set and an association relationship between the second data and the third data, wherein the association relationship between the second data and the third data is determined based on the first indication and the second indication.

17. The apparatus according to claim 15, wherein when converting the plurality of pieces of data into the serialized data based on the serialization rule set, the second data processing module is specifically configured to:
determine an association relationship between the second data and the third data based on the first indication and a second indication;
nest the plurality of pieces of data based on the association relationship; and
convert nested data into a plurality of pieces of serialized data based on the serialization rule set.

18. The apparatus according to any one of claims 14 to 16, wherein the second data processing module is further configured to receive the serialization rule in a configuration interface that is of the serialization rule set and that is displayed to the user.

19. The apparatus according to any one of claims 10 to 17, wherein when obtaining, from the data set, the first data carrying the first index, the first data processing module is specifically configured to:
display a configuration interface of the first data processing module to the user;
receive, through the configuration interface of the first data processing module, the first index entered by the user; and
obtain, from the data set, the first data carrying the first index.

20. The apparatus according to any one of claims 10 to 19, wherein when obtaining, from the data set, the first data carrying the first index, the first data processing module is specifically configured to:
obtain the first data from a storage device, wherein the storage device stores the data set.

21. A computing device, wherein the computing device comprises a processor and a memory, and the memory is configured to store computer program instructions; and
the processor invokes the computer program instructions stored in the memory, to perform the method according to any one of claims 1 to 10.
